# EUROPEAN PATENT APPLICATION

(11) **EP 1 510 321 A1**
(43) Date of publication of application: **02.03.2005**
(21) Application number: 03756114.9
(22) Date of filing: 27.05.2003
(51) Int. Cl.: B29C 39/02, B29C 39/38, B29C 39/26, B29B 17/00

(54) **TECHNIQUE FOR PRODUCING RECYCLED ARTICLE COMPRISING POURING MOLDING OF MOLTEN WASTE PLASTIC**

(30) Priority: 31.05.2002 JP 2002160845
(71) Applicant: Japan Material Enviromental co. inc., Gushikawa-shi, Okinawa 904-2234 (JP)
(72) Inventor: MATSUO, Toshizumi, Gushikawa-shi, Okinawa 904-2242 (JP)
(74) Representative: Haug, Dietmar
(86) International application number: PCT/JP2003/006620
(87) International publication number: WO 2003/101700

(57) **Abstract**

A method for producing a recycled article involving the pouring molding of a molten waste plastic, which comprises a step of feeding two or more types of waste plastic including a material with contaminants, a printed matter, or a colored material to a melting device to melt them together, a step of pouring the molten resin into a preheated mold by its own weight to thereby mold the resin, a step of forcedly cooling the mold having the molten resin therein and the resin with cooling water, and then a step of releasing the resulting molded article. The method has accomplished the technique wherein two or more types of plastic, which may be stained, colored or printed, may have attached matters, and may be of any material, are molded by melting them and pouring the molten resin into a mold by its own weight.

## Description

### FIELD OF THE INVENTION

This invention relates to a technology of pouring molding of at least two kinds of molten waste plastic. In other words, it relates to a technology of manufacturing recycled articles by a method of pouring/casting molding after crushing various sorts of waste plastic, whether the material is defaced or not, colored article, printed matter and attachment, and mixing, heating and melting large portion of thermoplastic resin. It also suggests devices and methods accompanied by the melting and casting technology, a series of recycled article producing/manufacturing plants and each facility.

### BACKGROUND OF INVENTION

Among various wastes products, raw garbage of food returns to nature through fertilization and backfilling, but waste plastic is most difficult to be disposed of among waste products because it does not return to nature even through backfilling and becomes a source of global warming with an increase in temperature through incineration due to high calories and also produces harmful gas such as dioxin.

In the international economic development, plastic products can be considered disposable because they can be produced inexpensively, using naphtha as a raw material and be easily mass-produced, but the disposal capacity at waste disposal sites depends on volume not weight, which is the largest obstacle for prolonging life of waste disposal sites.

Container and Packaging Recycling Law was implemented also in Japan, and recycling has been promoted, but it can be asserted that defaced waste plastic cannot be recycled in the present situation. As for prolonging life of final waste disposal sites for industrial wastes or general wastes, with this recycling technology throughout Japan it is concerned from the viewpoint of environment protection that troubles would be widespread nationwide due to lack of recycling technology and effectiveness.

Under the current situation, in order to recycle waste plastic, only technologies such that the separation and crushing are done by each material and each color to make raw material of recycled articles for textile and other products or conduct injection molding by each material are put to practical use.

However, because most waste plastic is defaced, cleansing is needed before being crushed, and it also requires labor cost.

In this way, because the conventional recycling technology for waste plastic is limited to single kind of resin, the separation work is essential, and defaced items, printed matter and material attached with a foreign object are separated as the ones which cannot be recycled, and thereby most waste are backfilled.

However, as mentioned above, wastes are mostly not new products such as defaced products, printed matter and material attached with a foreign object, and the recycled products are not spread from the reason that how these can be recycled at low cost is called into question. This is the current situation of material recycling, and it makes recycling difficult. Unless this problem is solved, the issue of backfilling, incineration and illegal dumping cannot be resolved, and environmental protection is difficult.

Also, in the conventional recycling technology, it goes through crushing companies, pellet and ingot agents as middlemen until the completion of recycled articles, so the recycled products are produced with each disposal cost and each shipping cost, and because they are sold at a price several times more than newly produced goods, most are difficult to sell.

Moreover, a material recycling technology, which can use casting molding with a large amount of waste plastic, whether it is defaced or not, has not been established yet.

Focusing on these problems, the technical problems of this invention are to materialize technologies, which do not require to separate waste plastic, can conduct casting molding by melting such wastes as defaced products, printed matters and material attached with a foreign object and can produce recycled articles inexpensively. In order to make this possible, it is necessary to readily and inexpensively materialize recycling production facilities.

### SUMMARY OF THE INVENTION

The technological problems of this invention are solved with the following means. The claim 1 is a method of manufacturing recycled articles by melting and pouring/casting molding of molten waste plastic, comprising the step of casting in a metal mold by self-weight after more than two kinds of waste, including material attached with a foreign object which does not contain paper seal, metal and chip of wood, printed matter or colored articles, are melted together

When more than two kinds of waste plastic, including material attached with a foreign object, printed matter or colored article, are melted together, it becomes candy-like molten resin with high viscous, but the molten resin with high viscous can produce recycled articles because it is cast in a metal mold by self-weight. As a result, there is no need to separate raw material, and most waste plastic can be recycled. Injection molding can become precision molding, but it is not suitable for casting of large-sized and high-volume products. It is also difficult to apply to molten resin with high viscous. Correspondingly, for casting molding by self-weight, the metal mold itself is simple and low cost and can be also applied to molten resin of waste plastic with high viscous

The claim 2 is a method of manufacturing recycled articles by melting and pouring/casting molding of molten waste plastic, comprising the process of providing more than two kinds of waste plastic in a melting machine and melting together, the process of casting molten resin in a preheated metal mold by self-weight, the process of forcedly cooling a metal mold with molten resin poured and the molten resin in the metal mold and the demolding process after the cooling process.

In this way, because molten resin is cast in a preheated metal mold by self-weight, it can smoothly cast even molten resin with high viscosity of which more than two kinds of waste plastic is melted together. Also, because a metal mold with molten resin poured by self-weight and the molten resin are forcedly cooled, the molten resin is contracted, thereby the demolding becomes easier, and it can mass-produce with shortened cooling time, reducing the manufacturing cycle of recycled articles.

The claim 3 is a heating method for a metal mold where melted waste plastic is cast, comprising a device of preheating a metal mold where melting resin is cast by self-weight, the step of leading the hot air which is discharged, after waste gas discharged to melt waste plastic, is provided to a pollution-free combustion equipment and incinerated, the step of introducing the heat wind in the hollow layer formed in walls surrounding the heating room and heating the interior of the heating room and heating indirectly the metal mold placed in the interior.

In this way, because it provides waste gas discharged after melting waste plastic to a pollution-free combustion equipment and leads hot air discharged after combustion to the heating device, the metal mold can be heated with the efficient use of waste heat discharged from the melting device, and it avoids high production costs. Also, because it takes means to introduce the heat air in the hollow layer formed in walls surrounding the heating room and to heat indirectly the metal mold placed in the interior of the heating room, operators are not directly exposed to the heat air, and it is safe and can prevent deterioration of working environment.

The claim 4 is a device of manufacturing recycled articles by melting and casting molding of waste plastic, comprising as for a heating room for preheating a metal mold, the means of casting molten resin in a metal mold by self-weight and the means of forcedly cooling the metal mold, the structure of running a trolley with a metal mold or casters by placing two shape steel materials in parallel and forming rails, and as for the means of casting molten resin in a metal mold by self-weight, the structure of placing rails where a trolley with a metal mold or a metal mold with casters runs on a seesaw-movement table to the discharging unit of molten resin.

In this way, because it has the structure of running a trolley with a metal mold or casters by placing two shape steel materials in parallel and forming rails, it can inexpensively materialize the carrying mechanism which has heat-resistant structure and can bear heavy loading without undergoing thermal deformation such as roller conveyors and chain conveyors. Therefore, there is no problem in terms of intensity even if the molten resin in a trolley with a metal mold or casters on shape steel rails is shocked by knocker or the like.

Also, as for the means of casting molten resin in a metal mold by self-weight, because it has the structure of placing rails where a trolley with a metal mold or metal mold with casters runs on a table with seesaw movement to the discharging unit of molten resin, the distance between the discharging unit of molten resin and the metal mold can be constant. As a result, regardless of the height and size of the metal mold, it consistently provides sufficiently melted resin in a metal mold by self-weight and can smoothly cast. Because it manufactures the products using the same metal mold collectively, rails are moved up or down only when a metal mold different in height and size is used and do not need to be seesawed frequently.

The claim 5 is a metal mold for melting and casting molding of waste plastic, comprising a metal mold where melting waste plastic is cast by self-weight, a presser die which can be moved downward so that the top of the molten resin in a metal mold can be pushed down and also the surface touching the molten resin in the metal mold which is Teflon-coated with fluorocarbon resin coating.

In this way, it has a presser die to cover the top of molten resin poured into a metal mold by self-weight, and also because the presser die can be moved downward, the top of the molten resin in a metal mold can be pushed down as the molten resin in the metal mold is cooled and removes bubble, reducing the volume, and it can manufacture high-quality and robust recycled articles with less blowhole and shrinkage. Moreover, it can push molten resin in a metal mold to every comer. Therefore, even if it is a large-sized product and has a complicated shape, it can cast smoothly.

Also, because the surface touching molten resin in a metal mold is Teflon-coated with fluorocarbon resin coating, it does not need to apply mold lubricant and can prevent a decline in workability. As a result, it can efficiently reuse the same metal mold and is suitable for mass-production.

The claim 6 is a device of melting and casting molding of waste plastic, comprising a storing heating discharging device to temporarily store resin melted in a melting machine, the storing heating discharging device having means to heat resin within the storing part, means to insulate heat which avoids heat dissipation, means to give pressure on the top of molten resin poured in a metal mold by self-weight which is placed closely to the storing heating discharging device.

In this way, because it has a storing heating discharging device to temporarily store resin melted in a melting machine, it can provide molten resin to a metal mold even for large-size products by self-weight successively and can manufacture large-size products which require a large amount of molten resin. Also, because the storing heating discharging device has means to heat resin within the storing part and means to insulate heat, it can efficiently control lowering of temperature of resin melted in a melting machine.

Moreover, because it has means to give pressure from the top of molten resin poured in a metal mold by self-weight and means to compress slap-down, it can spread molten resin to every corner of a metal mold even if it is resin with high viscosity which more than two kinds of waste plastic is melted together, and also it can manufacture high-quality recycled articles without blowhole and shrinkage.

Rails, where a trolley with a metal mold or a metal mold with casters runs, have aforementioned heat-resistant structure which two shape steel materials are placed parallel to each other, and because they are robust in terms of intensity, they can bear sufficiently even if the top of molten resin is pressurized or compressed slap-down.

The claim 7 is a demolding method of melting and pouring/casting molding products of molten waste plastic, comprising after completing primary pressure/cooling process by giving pressure on a presser die from the top, under the situation where a metal mold which molten resin is poured by self-weight and the molten resin in the metal mold together go through aspersion of cooling water or pool maceration, demolding from a metal mold and immersing only casting products demolded again into cooling water and thereby further cooling off.

In this way, because not only a metal mold where molten resin is poured and the molten resin are immersed together in a pool of cooling water, but also it takes a means to give pressure on a presser die from the top and push it into cooling water, molten resin and the entire metal mold can be forcedly cooled to the core of the molten resin products in an effective manner. As a result, it can prevent cracks without making blowhole and shrinkage in processed casting products. Also, when a metal mold is small-size and has thin-walls, it can cool off by spraying cooling water with a shower. In this case, it can simplify the cooling facility as well as the operation.

It can smoothly cast because it demolds from a metal mold after primary pressure/ cooling process completes and resin products are sufficiently contracted. Also, because it cools only demolded casting products by immersing them again into cooling water, it can forcedly cool off in a short time and is suitable for mass-production.

As mentioned in the claim 1, when more than two kinds of waste plastic including material attached with a foreign object, printed matter or colored article is melted together, it becomes candy-like molten resin with high viscosity, but the molten resin with high viscosity can produce recycled articles because it is cast in a metal mold by self-weight. As a result, there is no need to separate raw material, and most waste plastic can be recycled. Injection molding can become precision molding, but it is not suitable for casting of large-sized and high-volume products. It is also difficult to apply to molten resin with high viscosity. Correspondingly, for casting molding by self-weight, the metal mold itself is simple and low cost and can be also applied to molten resin of waste plastic with high viscosity.

As mentioned in the claim 2, because molten resin is cast in a preheated metal mold by self-weight, it can smoothly cast even molten resin with high viscosity which more than two kinds of waste plastic is melted together. Also, because a metal mold with molten resin poured by self-weight and the molten resin are forcedly cooled, the molten resin is contracted, and thereby the demolding becomes easier, and it can mass-produce with shortened cooling time, reducing the manufacturing cycle of recycled articles.

As mentioned in the claim 3, because it provides waste gas discharged after melting waste plastic to a pollution-free combustion equipment and leads hot air discharged after combustion to the heating device, the metal mold can be heated with the efficient use of waste heat discharged from the melting device, and it avoids high production costs. Also, because it takes means to introduce the hot air in the hollow layer formed in walls surrounding the heating room and to heat indirectly the metal mold placed in the interior of the heating room, operators are not directly exposed to the heat air, and it is safe and can prevent deterioration of working environment.

As mentioned in the claim 4, because it has the structure of running a trolley with a metal mold or casters by placing two shape steel materials in parallel and forming rails, it can inexpensively materialize the carrying mechanism which has heat-resistant structure and can bear heavy loading without undergoing thermal deformation such as roller conveyors and chain conveyors. Therefore, there is no problem in terms of intensity even if the molten resin in a trolley with a metal mold or casters on shape steel rails is shocked by knocker or the like.

Also, as for the means of casting molten resin in a metal mold by self-weight, because it has the structure of placing rails where a trolley with a metal mold or metal mold with casters runs on a table with seesaw movement to the discharging unit of molten resin, the distance between the discharging unit of molten resin and the metal mold can be constant. As a result, regardless of the height and size of the metal mold, it consistently provides sufficiently melted resin in a metal mold by self-weight and can smoothly cast. Because it manufactures the products using the same metal mold collectively, rails are moved up or down only when a metal mold different in height and size is used and do not need to be seesawed frequently.

As mentioned in the claim 5, it has a presser die to cover the top of molten resin poured in a metal mold by self-weight, and also because the presser die can be moved downward, the top of the molten resin in a metal mold can be pushed down as the molten resin in the metal mold is cooled and removes bubbles, reducing the volume, and it can manufacture high-quality and robust recycled articles with less blowhole and shrinkage. Moreover, it can push molten resin in a metal mold to every comer. Therefore, even if it is a large-sized product and has a complicated shape, it can cast smoothly.

Also, because the surface touching molten resin in a metal mold is Teflon-coated with fluorocarbon resin coating, it does not need to apply mold lubricant and can prevent a decline in workability. As a result, it can efficiently reuse the same metal mold and is suitable for mass-production.

As mentioned in the claim 6, because it has a storing heating discharging device to temporarily store resin melted in a melting machine, it can provide molten resin to a metal mold even for large-size products by self-weight successively and can manufacture large-sized products which requires a large amount of molten resin. Also, because the storing heating discharging device has means to heat resin within the storing part and means to insulate heat, it can efficiently control lowering of temperature of resin melted in a melting machine.

Moreover, because it has means to give pressure from the top of molten resin poured in a metal mold by self-weight and means to compress slap-down, it can spread molten resin to every corner of a metal mold even if it is resin with high viscosity which more than two kinds of waste plastic is melted together, and also it can manufacture high-quality recycled articles without blowhole and shrinkage.

Rails, on which a trolley with a metal mold or a metal mold with casters runs, have aforementioned heat-resistant structure which two shape steel materials are placed parallel to each other, and because they are robust in terms of intensity, they can bear sufficiently even if the top of molten resin is pressurized or compressed slap-down.

As mentioned in the claim 7, because not only a metal mold where molten resin is poured and the molten resin are immersed together in a pool of cooling water, but also it takes means to give pressure on a presser die from the top and push it into cooling water, molten resin and the entire metal mold can be forcedly cooled to the core of the molten resin products in an effective manner. As a result, it can prevent cracks without making blowhole and shrinkage in processed casting products. Also, when a metal mold is small-sized and has thin-walls, it can cool off by spraying cooling water with a shower. In this case, it can simplify the cooling facility as well as the operation.

It can smoothly cast because it demolds from a metal mold after primary pressure/ cooling process completes and resin products are sufficiently contracted. Also, because it cools only demolded casting products by immersing them again into cooling water, it can forcedly cool off in a short time and is suitable for mass-production.

### BRIEF DESCRIPTION OF THE DRAWING

Figure 1 is a top view showing the whole aspect of the production line of this invention.

Figure 2 is a front view showing the whole aspect of the production line of this invention.

Figure 3 is a longitudinal section parallel to rails of a heating room (B-B position).

Figure 4 is a longitudinal section perpendicular to rails of a heating room (A-A position).

Figure 5 is a C-C section view of figure 1 showing the vicinity of a melting machine, a storing heating discharging device and a seesaw-moving table.

Figure 6 is a front view of the part of figure 5 viewed from the side of the storing heating discharging device.

Figure 7 is a detail of the melting machine and a D-D section view in the figure 5.

Figure 8 is an enlargement of the part of a trolley in the figure 5.

Figure 9 is a longitudinal section in the E-E position of the figure 8.

Figure 10 is an oblique perspective figure of a shock device.

Figure 11 is an exploded perspective view showing the embodiment of a metal mold to cast a gardening planter.

Figure 12 is a longitudinal section in the situation where the metal mold in the figure 11 is assembled.

Figure 13 is a left side view of the metal mold in the figure 12.

Figure 14 is a top view of the forced-air cooling apparatus for a metal mold and a product of casting molding.

Figure 15 is a front view of the forced-air cooling apparatus in the figure 14.

Figure 16 is a section view showing a different embodiment of the metal mold.

### DESCRIPTION OF THE PREFERRED EMBODIMENTS

With regard to the reference numerals used, the following numbering is used throughout the various drawing figures.
(i) entrance
(L1) rail legs
(L2) fixed rail legs
(m) metal mold
(o) exit
(P1)-(P4) pipes
1 shape steel rail
2 shape steel rail
3 heating room
4 melting machine
4i melting room
5 storing heating discharging device
6 seesaw-moving table
6b lower frame
7 primary cooling pool
8 secondary cooling pool
9a beam
10 knocker attachment
11 removal table
12 product carrying conveyer
13 pressure device
13a primary pressure device
13b secondary pressure device
14 chiller device
15 melting machine stage
16 material slot
17 driving device
18 exhaust duct
19 stage
20 pollution-free combustion equipment
21 exhaust duct
22 duct
23 exhaust duct
24 trolley
25 wheels
26 hollow layer
27 internal circumference steel
28 outer circumference steel
29 heat insulating material
30 steel door
31 roller
32 guide rail
33 rubber curtain
34 screw
35 slot
36 kerosene boiler
37 electrical heater
38 insulating material
39 beating propeller
40 door
41 inspection window
42 shatter steel plate
43 sliding rails
44 angular sliding rails
45 base plate
46 guide board
47 seesaw wi re
48 pulley
49 winch
50 knocker
51 housing
52 inner mold
53 outer mold
54 presser die
55 chained line
56 guide rail
57 winches
58 winches
59 supporting board

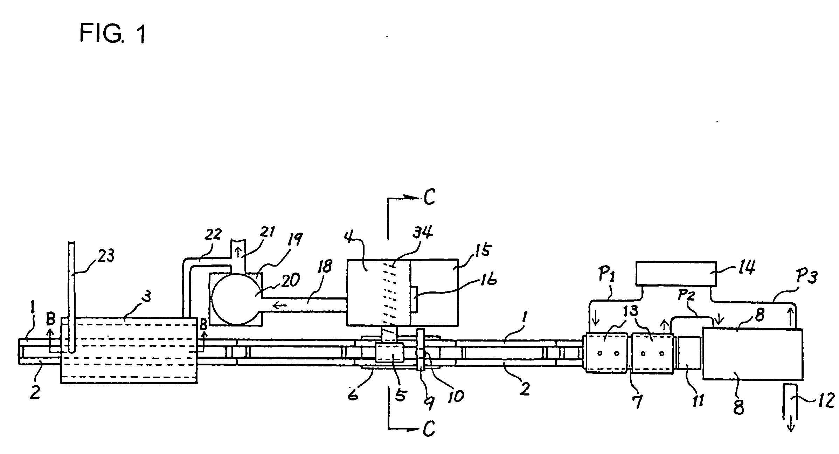

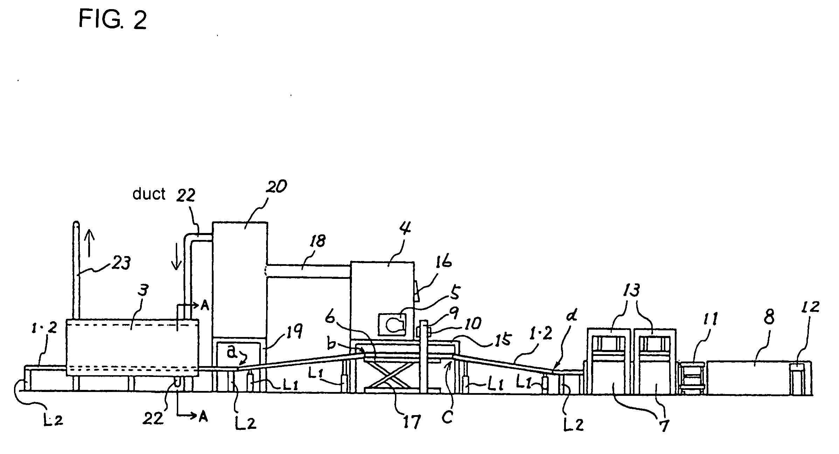

The following explains the embodiment showing how the manufacturing technology of recycled articles by melting and casting molding of waste plastic of this invention is actually embodied. Figure 1 and figure 2 are the whole aspect of the production line of this invention, and figure 1 is a top view and figure 2 is a front view.

Rails, where two shape steel materials 1 and 2 are placed in parallel, are built from side to side, and the heating room 3 in the far left side, the melting machine 4, storing heating discharging device 5 and seesaw-moving table 6 in the middle, and the primary cooling pool 7 and secondary cooling pool 8 in the right side are set up.

When the trolley carrying a metal mold is sent inside of the heating room 3 from the left side, the metal mold is heated in the heating room 3, and the trolley is transferred on the seesaw-moving table 6 when the metal mold is sufficiently heated. After the resin melted by heat in the melting machine 4 is temporarily stored in the storing heating discharging device 5, it is then poured by self-weight into the metal mold on the trolley on the seesaw-moving table 6. At this time, the bubbles in the molten resin are removed by driving knocker supported by the knocker 50 supporting device 9, and pressurizing the molten resin in the metal mold from the top or compressing slap-down.

After casting molding of the molten resin by self-weight is complete, the trolley is transferred to the primary cooling pool 7 in the far right side, and the metal mold filled with the molten resin is hung up by winch or the like and is put into the primary cooling pool 7. The metal mold is demolded on the formwork removal table 11 after it is pushed into the cooling water and completes the primary pressure/ cooling process by pressurizing the presser die of the metal mold from the top using the pressure device 13 while immersed in the cooling water pool 7. Manufacturing recycled articles is completed by transferring the demolded casting produces to the secondary cooling pool 8, immersing it again in the cooling water and sufficiently cooling off, which is carried out by the product carrying conveyor 12.

Cooling water is provided to the primary cooling pool 7 through the pipe P1 from the chiller device 14. Then, a circular operation is conducted, in which the cooling water is sent to the secondary cooling pool 8 through the pipe P2, returned to the chiller device 14 through the pipe P3 and cooled again.

More than two kinds of waste plastic are poured into the melting machine 4 on the melting machine stage 15 from the material slot 16 and are heated/ melted by a kerosene burner or the like. The melted resin is poured by self-weight into the metal mold on the trolley on the seesaw-moving table 6 after it is sent to the storing heating discharging device 5 with screw 34 and stored while being heated by a heater. The seesaw-moving table 6 is moved up and down by the seesaw-driving device 17.

Waste gas, discharged after the material resin is melted in the melting machine 4, is sent by the duct 18 to the pollution-free combustion equipment 20 on the stage 19, completely combusted at the maximum temperature of 800 degrees centigrade, and it is treated with exhaust gas, flue gas and deodorization. Part of waste gas made pollution-free is disposed of in the air by the exhaust duct 21, and part of the remaining or warm wind is provided to the heating room through the duct 22. It is discharged in the air by the opposite exhaust duct 23 after indirectly heating the interior of the heating room 3. Also, rails comprising the shape steel materials 1 and 2 are supported by fixed rail legs L 2, and the part of the rails which move up and down together with the seesaw-moving table 6 is supported by legs of mobile rails L 1.

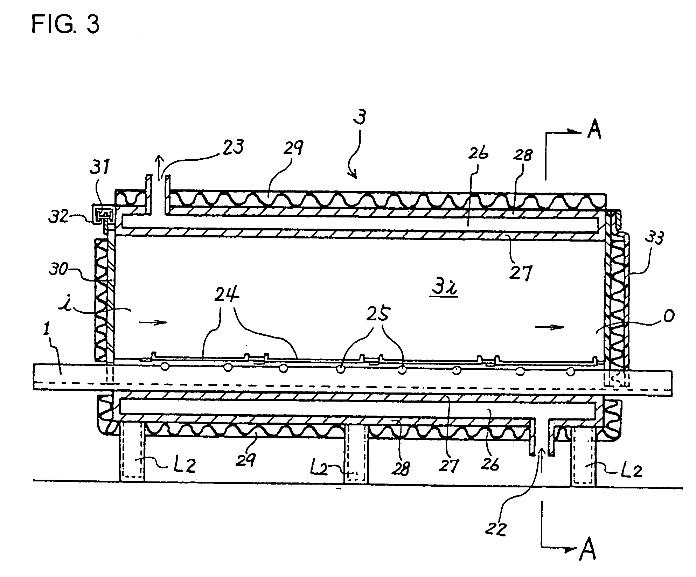

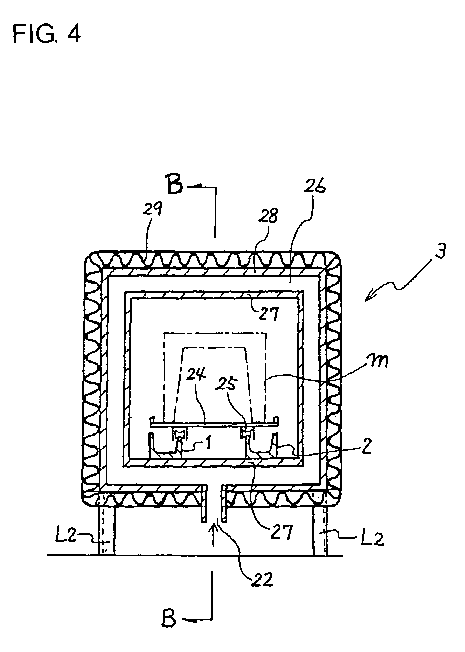

Referring to figure 3 and figure 4, it explains about the detail of the heating room 3.

Figure 3 is a longitudinal section parallel to rails of a heating room (B-B position), and figure 4 is a longitudinal section perpendicular to rails of a heating room (A-A position).

The heating room 3 shapes a square section tunnel as shown in figure 4, in which the shape steel materials 1 and 2 are placed in parallel, forming rails.

In other words, C-type steels 1 and 2, which are structural steel channels, are placed upward, but H-type steel, L-type steel or the like can be used as well.

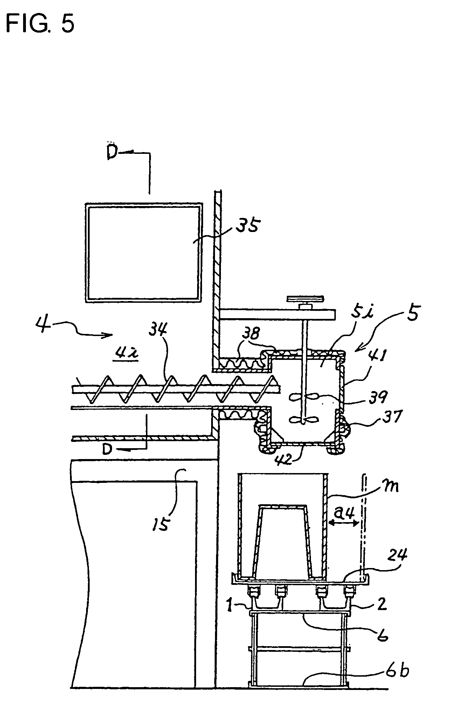

The trolley 24 is to carry the metal mold (m) and is placed on the shape steels 1 and 2 to run through e.g. the sash roller-like wheels 25. In the figure 4, each shape steels 1 and 2 has a wheel 25 respectively and can be supported by four wheels 25 when heavy goods are manufactured as shown in the figure 5.

The heating room 3 is surrounded in a tunneling state except the entrance (i) and the exit (o). In other words, as shown in the figure 4, it is surrounded by the upper, lower and sidewalls. However, each wall has a hollow layer 26 like a thermos bottle. Or it is a dual structure of the internal circumference steel 27 and outer circumference steel 28, forming space 26 between the two. The internal circumference steel 27 and outer circumference steel 28 are reinforced with connected ribs, directed in such that a smooth flow of hot wind is not prevented, and the surface of the outer circumference steel 28 is covered by heat insulating material 29. Rails comprising the shape steels 1 and 2 are placed inside of the internal circumference steel 27 on the side of the lower wall.

The duct 22 from the pollution-free combustion equipment is connected to the lower wall close to the exit (o) of the hollow layer 26, and the exhaust duct 23 with a heat resistance blower is connected to the opposite side or the ceiling wall in the side of the entrance (i) and is released in the air. Therefore, the inside of the heat room 3 (i) is heated by filling waste gas sent from the pollution-free combustion equipment or hot wind in the hollow layer 26, indirectly heating the metal mold (m) on the trolley 24 inside of the heat room 3. Waste gas after heating is released in the air through the duct 23.

In other words, hot wind with the maximum temperature of exhaust heat, 500 degrees centigrade discharged from the exhaust duct 21 is poured inside of the hollow layer 26 in the heating room 3 by having a heat resistance blower in the exhaust duct 22 as shown in figure 1 and 2, and the inside of the hollow layer 26 is constantly maintained at more than 300 degrees centigrade with waste heat, and the inside of the heating room 3 is constantly heated at more than 200 degrees centigrade. The metal mold (m) in the heating room 3 is indirectly heated in such a way and is heated at more than 100 degrees centigrade for about 10 minutes. Because the inside of the heating room 3 is indirectly heated, operators are not exposed to the heat wind, and there is no concern of deteriorating the working environment.

Because the roller 31 is attached to the upper end of the steel door 30 with a heat insulating material which closes the entrance (i) of the heating room 3 and is hung to support in the guide rail 32 fixed in the edge of the ceiling wall of the heating room, it closes the entrance (i) by sliding the door 30 after opening the door 30 by sliding from side to side, setting the trolley on the shape steel rails 1 and 2, putting the metal mold on the trolley and sending it into the heating room 3.

The exit (o) of the heating room 3 can be closed by a sliding door, but in the figures, the adiabatic heat resistance rubber curtain 33 is hung down like a store curtain, which does not require a certain opening and closing operation. Therefore, when the metal mold on the front trolley 24 is sufficiently heated while several trolleys 24 are put in the heating room 3, as mentioned above, the front trolley gets out from the heating room 3, pushing the rubber curtain 33 by pushing a new trolley from the entrance (i) after setting the trolley 24 on the shape steel rails 1 and 2 in front of the entrance (i) of the heating room 3.

In the figures, four trolleys 24 are accommodated in the heating room 3 while heating several metal molds, and they are pushed out of the heating room by the subsequent trolleys when the metal mold before the trolley is sufficiently heated. Or, with a structure in which each trolley 24 is connected with removable rings or the like, it can be also pulled out of the side of the seesaw-moving table 6 by a winch. Also, the opening and closing structure of the entrance and exit is not limited to the one shown in the figures.

As mentioned above, because the inside of the heating room 3 uses waste heat from the pollution-free combustion equipment, it does not require a special boiler or fuel. Also, because the waste heat has a temperature of 300-500 degrees centigrade, it can be sufficiently heated although the waste heat is diverted from the exhaust duct of the combustion device 20 and used for heating the metal mold. As mentioned above, it has a structure in which operators are not exposed to the hot wind although the metal mold is heated up to around 200 degrees centigrade.

The largest challenge in this method is a metal mold transferring line in the heating room (3i) at constantly around 200 degrees centigrade. A roller or chain method will be specialized because of high heat, and it is very expensive for a collateral facility. Therefore, a substantial reduction of equipment expenses was materialized by making the structural steel channels as the rails for the trolley to run, and by pushing the inside of the metal mold heating room (3i) with the subsequent trolleys 24, as well as pulling out with winches from the seesaw-moving table 6.

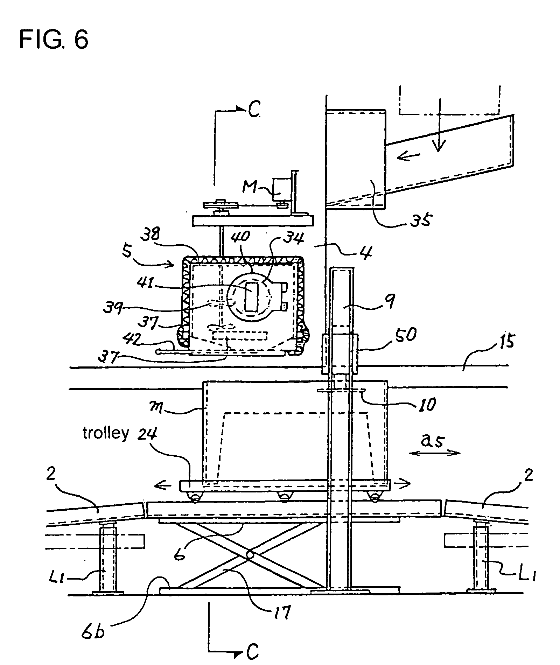

The figure 5 and 6 show the vicinity of the melting machine 4 of waste plastic, storing heating discharging device 5 and seesaw-moving table 6 as shown in the figure 1 and 2. The figure 5 is a C-C section view of figure 1, the screw 34 perpendicular to shape steel rails 1 and 2 is built in the bottom in the melting room 4i of the melting machine 4 on the melting machine stage 15, and the storing heating discharging device 5 is placed before the screw 34.

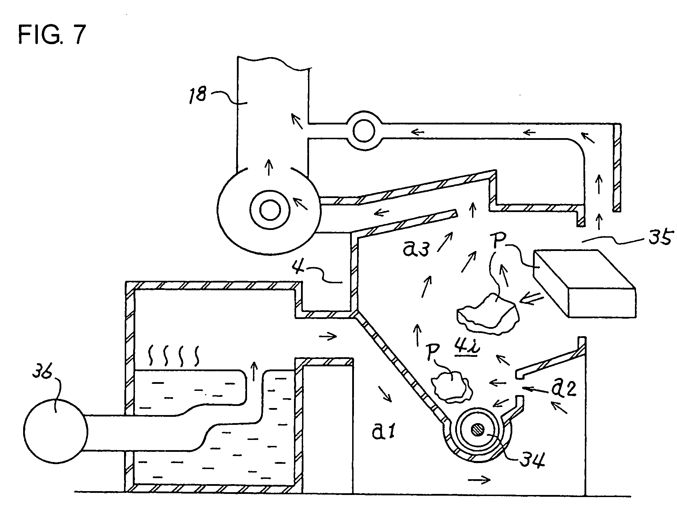

The figure 6 is a front view which is seen from the side of the storing heating discharging device 5 (only the surface of the insulating material 38 is shown in a section view), and the side of the melting machine 4 has the slot 35 for waste plastic. The figure 7 is a longitudinal section of the melting machine 4 or a D-D section view in the figure 5, and the screw 34 is built in the bottom of the melting room (4i).

Combustion gas provided from the kerosene boiler 36 is, as shown with the arrow a1, poured downward in the bottom of the melting room (4i), the inside of the melting room (4i) is heated from the bottom by hot wind with a temperature of 300-400 degrees centigrade and the resin inside is melted by heat with a temperature of more than 200 degrees centigrade. Then, as shown with the arrow a2, more than two kinds of waste plastic P provided from the slot 35 after being poured in the melting room (4i) is directly melted by heat. Next, as shown with the arrow 3, the combustion gas moves upward in the melting room (4i), is lead to the exhaust duct 18 and is sent to the pollution-free combustion equipment 20 as shown in the figure 1 and 2.

The resin melted with heat in the melting room (4i) is pushed out by the screw 34 to the storing heating discharging device 5. The side wall has the electrical heater 37 for heating, and the surface is covered with the insulating material 38 so that the molten resin sent into the storing heating discharging device 5 can keep warm with a temperature of, for instance, around 200-260 degrees centigrade. Moreover, the beating propeller 39 is built in so that the color of the molten resin can be even by mixing and is driven by the upper motor M. Therefore, the molten resin in the storing heating discharging room (5i) can be mixed evenly without lowering its temperature and is kept in the suitable situation for the metal mold to be poured by self-weight.

The front position of the screw 34 is closed with the door 40 with the inspection door to clean the melting products and take out the screw 34 open. The door 40 has an inspection window 41 with a dual hollow structure made of heat-resisting glass so that the door is not fogged up with a temperature difference, the inside can be inspected and how much the molten resin is stored can be confirmed. The bottom of the storing heating discharging device 5 forms a discharging opening by opening e.g. around more than 15 cm in length and breadth, which is closed with the horizontally-placed sliding steel plate.

The amount of melting products which can be stored in the vicinity of the screw 34 of the melting machine 4 is within twenty liters, and the capacity is inadequate for casting molding.

Casting molding with sufficient amount requires a lot of time for casting, lowering the temperature of melting products during the period. Therefore, when a melting product with a temperature of around 200 degrees centigrade is poured and piled up, the resin is not fully blended, and there is a risk of separation. However, it can temporarily store from twenty liters to around forty liters by setting the storing heating discharging device 5. As a result, because it can reduce the time for casting and can cast a large amount of melting products, it can solve the problem of having the concave groove made by melting products, which are not blended due to a temperature difference remains as a line on the surface.

As shown in the figure 6, the seesaw-moving table 6 is placed in the bottom of the storing heating discharging device 5 in the figure 1 and 2 and moves up and down with the driving device 17. In other words, the electric-powered lift table 6 to keep the distance of dropping the melting products after discharge to the height of various metal molds constant is provided, and the seesaw-moving table 6 is moved downward when there is a tall metal mold and the seesaw-moving table 6 is moved upward when there is a short metal mold.

The seesaw-moving table 6 is moved up and down by electric drive with the driving device 17, and it is necessary to adjust the height of the both sides of the shape steel rails 1 and 2 to the height of the seesaw-moving table 6. In other words, it is necessary to set both sides of the shape steels 1 and 2 to the position moved upward when the seesaw-moving table 6 is moved upward, as shown with the solid line, and necessary to set both sides of the shape steels 1 and 2 to the position moved downward when the seesaw-moving table 6 is moved downward, as shown with the chained line.

Because both sides of the shape steels 1 and 2 are supported by the variable rail legs (L1 ), the height of the shape steel rails 1 and 2 can match with the height of the seesaw-moving table 6 by driving the rail legs (L1 ) manually. The rail legs (L1 ) can be a motor driving.

The shape steel rails 1 and 2 are fixed on the seesaw-moving table 6, and the trolley with the metal mold (m) heated runs on the shape steel rails 1 and 2 from the heating room 3 and stops.

As shown in the figure 2, the seesaw-moving table 6 is moved up and down at the beginning to the heating room 3 where the trolley is set, but no difference in grade is made on the shape steel rails 1 and 2 because the shape steel rails 1 and 2, where the height of the heating room 3 varies to the shape steel rails 1 and 2, slightly change their angles with being closely located to each other as shown in (a) (b) (c) (d). Therefore, even the trolley 24 with heavy load of the metal mold (m) can be smoothly transferred through on the seesaw-moving table 6 from the heating room 3 to the final cooling pool 7.

When it pulls open the shatter steel plate 42 with the trolley arrived, the molten resin in the storing heating discharging room (5i) is dropped, being poured into the metal mold (m).

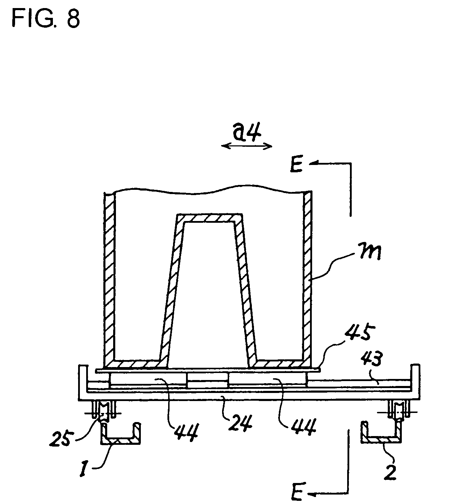

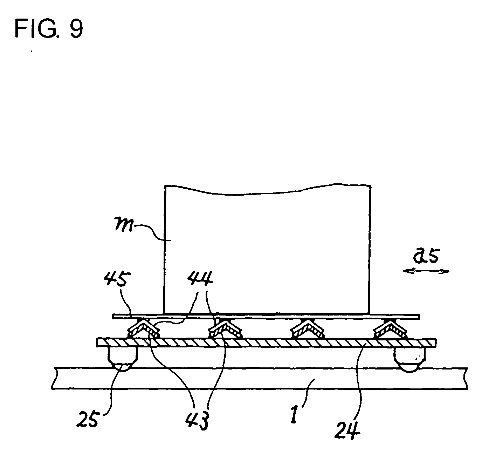

Because the discharging opening can be selected and adjusted by pulling the shatter steel plate 42, the dropping position to the metal mold and the amount of melting products being poured can be selected and adjusted by extending the breadth of the discharging opening of melting products even when the maximal breadth of the metal mold is set 60 cm. Also, at this time, the discharged molten resin needs to be evenly poured in the metal mold (m) entirely. For that, as shown in the figure 8 and 9, it has a structure where the metal mold (m) can be moved front and back.

The figure 8 is an enlarged view of the trolley 24 in the figure 5, and the figure 9 is a longitudinal section in the E-E position of the figure 8. Several angular sliding rails 43 perpendicular to shape steel rails 1 and 2 are fixed in parallel to each other on the trolley 24. Similarly, the angular sliding rails 44 are stepped over these sliding rails 43, and the base plate 45 is placed and fixed on the angular sliding rails 44.

Therefore, because the angular sliding rails 44 slide front and back on the sliding rails 43 on the trolley 24, the metal mold (m) can be easily moved front and back, and the dropping position of the molten resin into the metal mold (m) can be freely selected. It is sufficient to run and move the trolley 24 itself in right and left direction or in the direction of the arrow (a5) to select the dropping position in the right and the left direction in the metal mold (m).

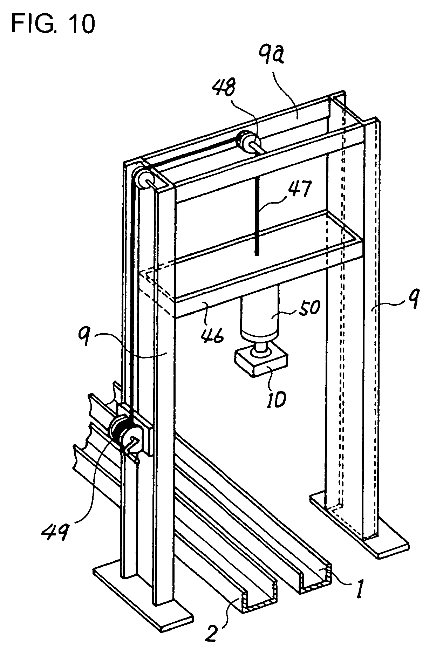

The molten resin can be dropped into the optional position in the metal mold (m), because the molten resin mixed with more than two kinds of waste plastic is high viscosity, there is a risk that melting products do not spread out to every corner of the metal mold and that bubbles stay in the molten resin poured, making a blowhole or shrinkage. Therefore, there is a means to directly give an impact on and pressurize the top of the molten resin or compress slap-down in the middle of casting or when the casting completes. The figure 10 is an oblique perspective figure of a shock device for the purpose.

9 is a knocker supporting device made of two supporting posts, and the seesaw wire 47 for the knocker 50 placed in the guide board 46 is wound around the winch 49 through the pulley 48 placed in the upper beam (9a). Therefore, the upper and lower position of the guide board 46 can be set by winding up or back the winch 49. The top of the molten resin is slammed, removing bubbles in the molten resin, and the molten resin is spread to every corner of the metal mold by driving the direct knocker 50 at a prescribed height and by shaking and shocking the knocker attachment 10 up and down. For the attachment 10, various shapes and sizes can be adopted, according to shapes or sizes of products and the location being used, and if, for instance, a lot of needles like a turned pin-holder for Japanese flora art (ikebana) or like-knife are used, the bubbles inside can be effectively pushed out by sticking the inside of the molten resin with a like-knife or a lot of needles. The optional position of the molten resin in the metal mold (m) can be pressurized by moving the metal mold (m) in the direction of right and left and front and back, as mentioned above, under the attachment 10.

As mentioned above, as for the manufacturing line which transfers the metal mold from the heating room 3 to the forcedly cooling pool 7, it is important to keep the metal mold always in a high-temperature state until casting process, and a line in the high-temperature state of around 200 degrees centigrade is required from the heating room 3 to the forcedly cooling pool 7.

Therefore, the line with a heat-resistant structure is materialized by forming the rails 1 and 2 where shape steel materials are placed in parallel as rails for the trolley 24**,** which transfers the metal mold, to run. Also, the height of the metal mold heating room 3 is fixed because there are pipes and ducts, and it has a structure of adjusting the height or gradient of the both sides of the shape steel rails 1 and 2, as mentioned above, to the adjustment of the height of seesaw-moving table 6.

Also, as mentioned above, the variable rail legs (L1) can be operated manually. There is no need to change the height of the seesaw-moving table 6 for at least half a day if the casting metal mold is not changed for at least half a day, so it is sufficient to drive manually.

The biggest problem to materialize the power saving for manufacturing recycled articles by molten resin with a high-temperature is a heat resistance measure, and as mentioned above, because the inside of the metal mold heating room is always in a temperature of around 200 degrees centigrade, a bearing of a roller conveyor as means to transfer the metal mold cannot resist the heat, a chain conveyor is stainless-steel, and both are specialized and expensive. However, as mentioned above, the heat resistance structure can be materialized by forming the rails 1 and 2 with the existing shape steel and making a structure to run the trolley 24 on them, and the cost can also be reduced substantially. Because it is excellent at shock resistance, and the durability can be improved, it became possible to have a direct impact on the molten resin in the metal mold on shape steel rails 1 and 2.

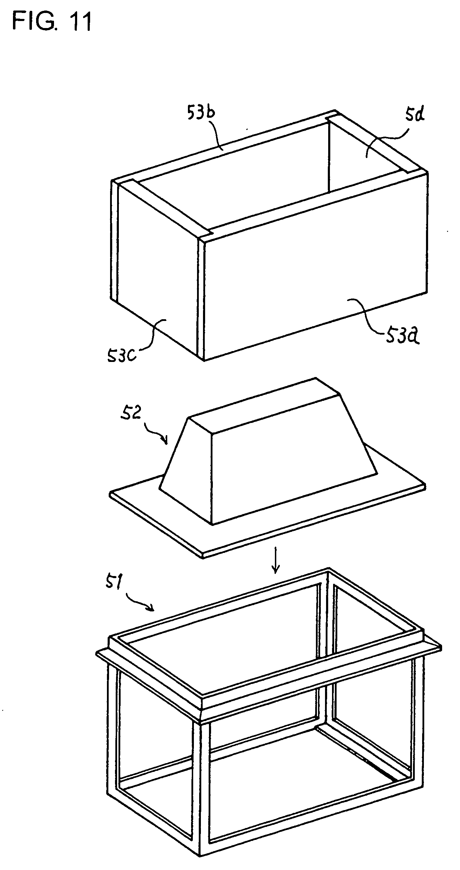

The figure 11 is a perspective view showing the embodiment of a metal mold to cast a gardening planter, and there is a structure that the inner mold 52 with integral structure is inserted into the housing 51, and the outer molds (53a) (53b) in front and back are cast from above, and the outer molds (53c) (53d) in right and left are cast.

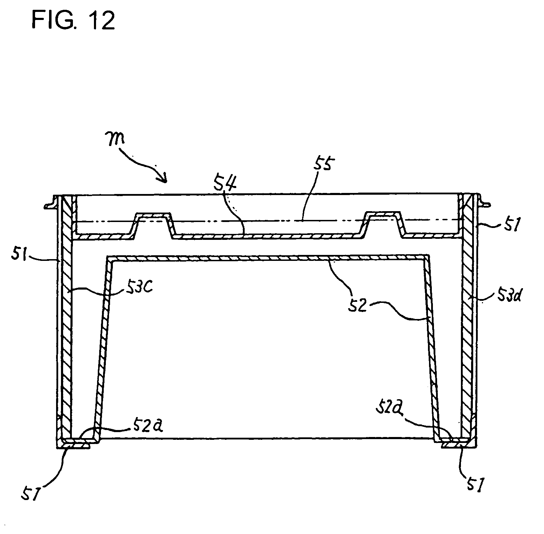

The figure 12 is a longitudinal section of being assembled in such a way, and the inner mold 52 is inserted in the housing 51. The outer molds (53c) (53d) in right and left are inserted along the inner surface of the housing 51 on the bottom (52a) of the inner mold 52.

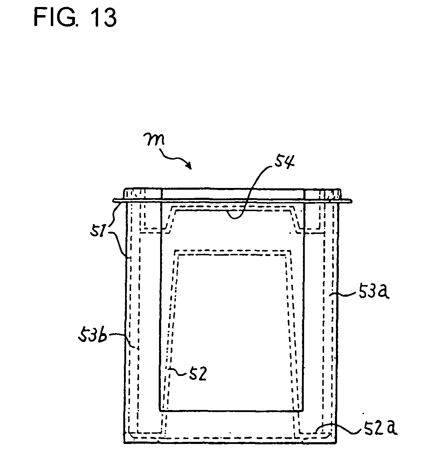

The figure 13 is a left side view of the metal mold in the figure 11 and 12, showing that the outer molds (53a) (53b) in front and back are inserted along the inner surface of the housing 51 on the bottom (52a) of the inner mold 52**.**

The presser die 54 is covered on the side of the inner mold 52 in the inside of the outer molds (53a)-(53d). As for casting, molten resin is cast by self-weight between the outer molds (53a)-(53d) and the inner mold 52 with the presser die 54 removed and also cast by self-weight in the upper side of the inner mold 52 at the end to the position of the chained line 55 in the figure 12. The presser die 54 is covered on the chained line 55 and is automatically pressed.

In other words, the shatter board 42 gets open after moving the metal mold under the shatter board 42 in the figure 5 and 6, and molten resin is cast by self-weight between the outer molds (53a)-(53d) and the inner mold 52, and at this time molten resin is cast by self-weight in the entire metal mold by moving the metal mold in the direction of the arrows (a4) and (a5). The molten resin is pushed to every corner in the metal mold and is tamped down removing bubbles with impact strength by the attachment 10 in the figure10.

Next, the process of reopening the shatter board 42 and pressurizing and removing bubbles with the attachment 10 every time molten resin is added is repeated. Finally the presser die 54 is covered after molten resin is poured until the surface of the inner mold 52 is hidden or to the position of the chained line 55, which is pressed by the attachment 10.

When the top of the molten resin is pressurized and pushed with the presser die 54, the presser die 54 is gradually pushed down and moves downward because the bubbles in the molten resin are removed, and the molten resin cools off and gradually reduces its size.

As for the metal mold, because more than two kinds of waste plastic is melted at a temperature of around 200 degrees centigrade and is cast by self-weight, it is expanded with heat, and it shrinks and the size significantly reduces when it gets normal temperature. Therefore, products cannot be made as planned unless the casting mold (m) is a mold which thermal shrinkage is taken into account.

In the final process of casting, when the final pressurizing compression is conducted by the attachment 10 and followed by forced water cooling, because bubbles and extra melting products made during the shrinkage by heat contraction or pressurizing especially from the top of the presser die 54 are discharged by pressure, it is effective as a special casting mold for more than two kinds of waste plastic. Also, the metal mold has a hole to release gas so that the bubbles in molten resin can be easily removed.

As mentioned above, molten resin of more than two kinds of waste plastic undergoes significant heat contraction, and the width, depth and height of the metal mold need to be set, considering the contraction percentage. Especially as for the height of the metal mold, it needs to have sufficient height. Contraction percentage differs, depending on the percentage of mixture of waste plastic, but it is mostly more than 6 percent. The height of the metal mold shall be more than 10 percent, considering adding the height of the presser die 54 on molten resin. The width and depth of the metal mold are around 0.3 percent because pressure is applied from the presser die 54, and if it makes the metal mold bigger, it becomes standardized size.

In other words, because melting products are poured to the height of the chained line 55, which is more than the amount of the contraction of the molten resin, the presser die 54 is placed higher than the outer mold (53a) before pressure is applied with the presser die 54, and as pressure continues to be applied, it stops at the height of the outer mold (53a) at the end, making a product with standardized height. The method of the metal mold is immediate form removal method, and also it can easily manufacture special order items by replacing with an outer mold as outer mold (53a), which is engraved with an original company name or mark.

Also, the surface of the metal mold, being poured with molten resin, is fluorocarbon resin coating and Teflon-coated, and it can be maintained in a favorable condition over several hundred times of remolding without applying mold lubricant

Explanation about a metal mold has been provided, referring to the metal mold to cast a gardening planter shown in the figure 11 through 13, which is common to a metal mold when other recycled articles are cast. Also, a metal mold is not limited to a disassembly method shown in the figures and can be an integral structure. It is also possible to cast several products at one time by forming several metal molds in a single metal mold.

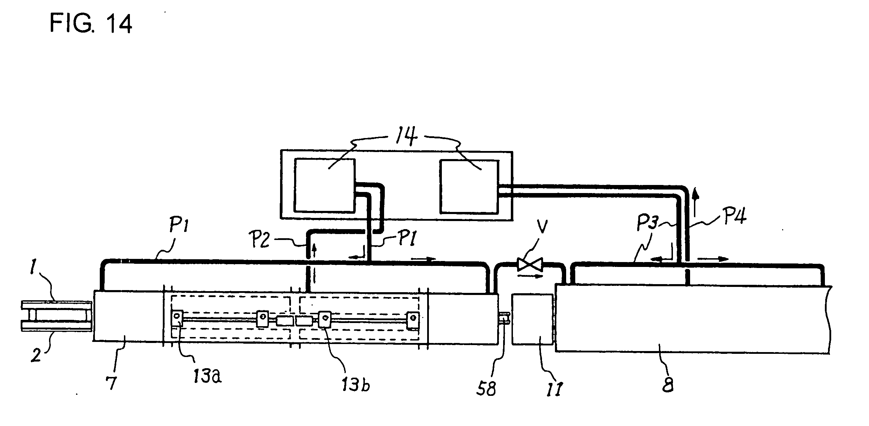

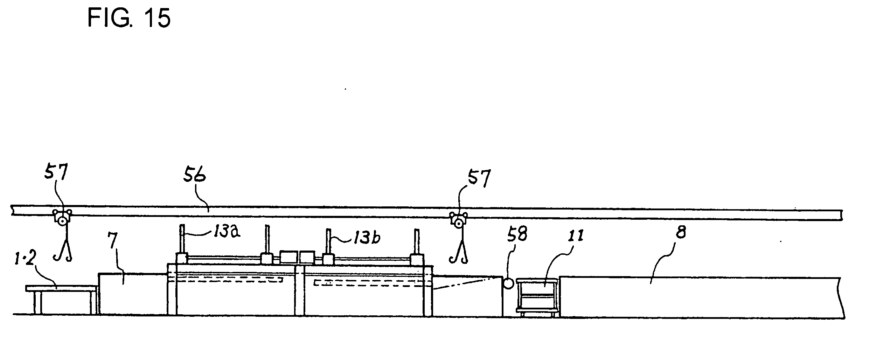

The figure 14 and 15 show the process of forced cooling for casting products, the figure 14 is a top view and figure 15 is a front view. 7 is primary cooling pool and 8 is secondary cooling pool, and the shape steel rails 1 and 2 are extended to the front edge of the primary cooling pool 7. In the figure 14, the primary cooling pool 7 and secondary cooling pool 8 are connected with coupling pipes through the chiller device 14 and circulation pipeline (P1-P4), and cooling water is provided from the chiller device 14 through the pipes (P1) (P2). Water heated by cooling the metal mold in the cooling pool is returned through the pipes (P2) (P4) to the chiller device 14**,** which is provided to the cooling pool after being cooled again.

As shown in the figure 15**,** the guide rail 56 in the ceiling is extended from the shape steel rails 1 and 2 and the primary pool 7 to the secondary cooling pool 8, and there are winches 57 which run guided by the rail 56. Therefore, the metal mold transferred on the shape steel rails 1 and 2 is hung up with the hooks of the winches 57 and are transferred onto the primary cooling pool 7, and the metal mold filled with molten resin is subsided in the cooling water and cooled.

The primary cooling pool 7 is made sufficiently long in order to cool off more than two sets of metal molds simultaneously, and two pressure devices 13 to push the metal mold into the cooling water are set up. Also, there are winches 58 to pull up the metal mold in the primary cooling pool 7.

When a metal mold is hung down into the cooling water in the primary cooling pool 7, it is pulled down toward the lower part of the primary pressure device (13a) by the winches 58, while the pressure device 13 is being raised up. Next, when a subsequent metal mold is similarly hung down into the primary cooling pool 7 from the shape steel rails 1 and 2, while both pressure devices (13a) (13b) are being temporarily raised, the metal mold under the primary pressure device (13a) is transferred while being pulled down to the lower side of the secondary pressure device (13b) by winches 58.

In this way, a metal mold that is cooled off in the primary cooling pool 7, is pulled to the outer side of the secondary pressure device (13b) by winches 58, and pulled up by the running winches 57, and the metal mold and recycled articles are demolded after being placed on the demolding table 11. In this way, the only molded product, after being demolded, is hug up by the running winches 57, is transferred onto the secondary cooling pool 8, hung down, and the only molded product is forcedly cooled off in the cooling water again. By cooling sufficiently, a molded product becomes complete, and is carried out by the product-carrying conveyer.

The metal mold and the molten resin, which are carried by the trolley 24, have the temperature of about 150 degrees centigrade, but these combined metal mold and the molten resin are immersed into the cooling water that is less than ten degrees centigrade in the primary cooling pool 7. At the same time, the pressure devices (13a) (13b) such as a jack type or a hydraulic cylinder type apply pressure continuously on the aforementioned presser die 54 from the top. Because the molten resin in the metal mold shrinks and increases in viscosity as it cools down, the pressurizing power by the pressure devices (13a) (13b) gradually increases. Most of the primary cooling can be done in more than ten minutes and less than sixty minutes, although a cooling time varies depending on the molten resin volume and its shape.

The combined material, after being cooled off in the primary cooling pool 7, is pulled out of the primary cooling pool 7, immediately demolded on the demolding table 11, the metal mold is assembled and returned to the heating room, and only the recycled articles are immersed again into the cooling water that is less than ten degrees centigrade in the secondary cooling pool 8, and is forcedly cooled off until the center of the melting material becomes less than the room temperature. Through this series of processes, homogeneous process scraps with no blowhole, air hole and shrinkage made by bubbles can be made which surpass the breaking strength of concrete. The cooling water in the primary cooling pool 7 and the secondary cooling pool 8 is deeper than the height of the metal mold. The workability would be good if the demolding table 11 is a mobile type, and demolding operation is made after it is pulled from between the primary cooling pool 7 and secondary cooling pool 8.

As for cooling and pressure time in the primary cooling pool 7, the metal mold is intermittently transferred onto the seesaw-moving table 6 from the heating room 3 by a certain amount of time, for instance, every 2-15 minutes by setting the time to be able to complete it within the time of the casting process of molten resin, and next the metal mold is transferred to the cooling pool 7 and is forcedly cooled. Or, transferred onto the seesaw-moving table 6 with each trolley 24 connected, and casting molding of molten resin is made one by one, and transferred to the cooling pool 7.

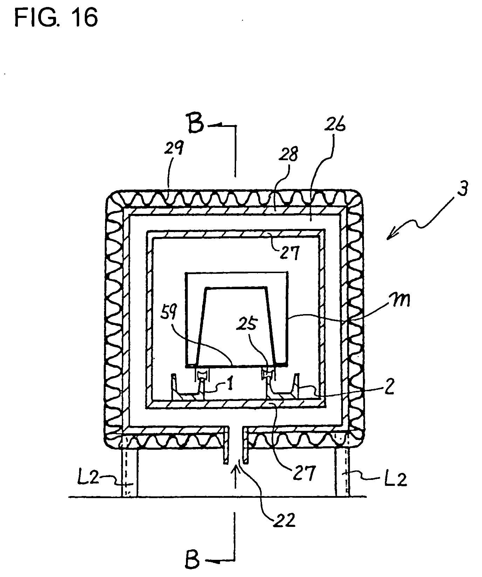

The figure 16 is another embodiment of the metal mold (m), wheels 25 are placed on the bottom of the metal mold (m) through the supporting board 59, and there is a structure that the metal mold (m) itself runs on the shape steel rails 1 and 2. In this way, when the metal mold (m) has two wheels, it goes without saying the trolley 24 is not needed. Therefore, also when the metal mold (m) is transferred from the heating room in the figure 3 and 4 to the forced cooling part in the figure 14 and 15, the metal mold (m) itself would run on the shape steel rails 1 and 2 because the trolley 24 is not used.

Therefore, the metal mold shown in the figure 11-13 shall be also fixed with such a technique as welding the wheels 25 onto the bottom. There is no problem if there is a bottom which the wheels 25 are directly placed corresponding to the position of the shape steel rails 1 and 2, but as shown in the figure 16, when it is impossible, the supporting board 59 can be placed to the bottom of the metal mold (m), and the wheels 25 are placed to the supporting board 59. It is convenient for handling and operation if a handle or means to hook winches are in place.

Next, in order to cast molten resin in a random location of the metal mold (m), it employs a method of which the base plate 45 with the metal mold (m) slides forward and backward in the direction of the arrow (a4) on the trolley 24, as in the figure 8 and 9, and the trolley 24 runs sideways (in the direction of the arrow a5). Correspondingly, when the metal mold itself runs, it employs a method of which the seesaw-moving table 6 moves front and back in the direction of the arrow (a4), instead of the structure in which the metal mold is sliding forward and backward on the trolley 24.

For example, using the figure 5 and 6 to explain, assuming the structure in which the lower frame (6b) of the seesaw-moving table 6 moves against the installation surface in the direction of the arrow (a4). At this time, similar to the cases in the figure 8 and 9, it is possible to construct a structure such that angular slider 44, which is mounted on the seesaw-moving table 6, slides forward and backward on the angular sliding cabinet 43, which is set up on the installation side. At this point, the forward-backward movement becomes easier if a koro (bearing-like object) or ball is lied between the lower side of angular sliding rail 43 and the upper side of the angular slider 44**.**

It is also possible to construct a structure such that the shape steel rails 1 and 2 are connected together on the seesaw-moving table 6 and that only this combined shape steel 1 and 2 moves front and back against the upper side of the seesaw-moving table 6.

In this way, by constructing a structure in which the seesaw-moving table 6, where molten resin drops, moves forward and backward, that is, perpendicular to the shape steel rails 1 and 2, or the shape steel rails 1 and 2 on the seesaw-moving table 6 moves forward and backward, and the metal mold (m) with casters on the shape steel rails 1 and 2 runs toward the shape steel rails, similar to the figure 8 and 9, it is possible to cast molten resin in a random location of the metal mold (m) by moving the metal mold forward and backward as well as sideways.

In this way, by removing the trolley 24 and attaching casters on the metal mold (m) itself, the structure can be simplified and man-hour operation can be reduced. Also, the amount of heat to heat the trolley 24 inside the heating room 3 can be cut down. Therefore, particularly in the case of a large-sized metal mold, it is more effective to attach casters to the metal mold in itself.

Next, instead of the primary cooling pool 7, which is set up on the furthest right of the shape steel rails in the figure 14 and 15, a means of shower to spray cooling water can be structured. When a product, which is molded by casting into the metal mold (m), is small-sized and has thin walls, the primary cooling can be done by simply spraying cooling water using the shower method, rather than immersing in the pool of cooling water 7. In this case, the cooling is done by extending the shape steel rails 1 and 2 to the position of the shower method, spraying cooling water onto the lower side of the metal mold between the shape steel rails 1 and 2 using the upper-facing shower method, or spraying cooling water onto the side of the metal mold using the sideway-facing shower method.

Needless to say, heated water used for spray cooling is returned to the chiller device 14 and reused after being cooled off again.

If the cooling shower method is set up, instead of the primary cooling pool 7, we can omit the process of pulling up a large-sized and high volume metal mold and hanging down into the primary cooling pool 7, allowing the process to be simplified.

Casting products after demolding on the demolding table 11 is forcedly cooled off by immersing into the cooling water in the secondary cooling pool 8, instead of using a shower.

As described above, because the facility of this invention has a simple and firm structure, it is possible to run the operation and make it practical by reducing the investment capital as much as possible. Particularly, processing the waste scraps in an isolated island has become a serious problem, requiring high shipping costs to carry it out outside the isolated island, and preventing the construction of recycling society. Yet these problems can be resolved using this invention. Furthermore, this invention, which processes various waste plastic that is defaced or has materials attached with a foreign object into recycled articles, is based on the origin of waste product recycling, and as a measure on waste products in the Japanese society, the significance and technological development of manufacturing recycled articles, using plastic that is mostly a nuisance to the construction of recycling society, is not for enterprises, but rather contributes to the protection of the environment in Japan, as well as the creation of a new industry.

Also, it is possible to operate a regional-size plant in a region where the recycling operation using the aforementioned facility can be done, not requiring to carry out the materials to a distant prefecture for processing waste plastic. This allows to manufacture recycled articles immediately after the outsourcing of the waste collection, making the pure recycling society possible in various parts of the nation. The ripple effect of this invention is tremendous.

Moreover, because these recycled articles from the waste plastic are molded by casting the mixture of various sorts of waste plastic, combined with various colors and stains, by self-weight, the finished products would have a unique pattern, creating a beauty of the product as well as a good design.

## Claims

1. A method of manufacturing recycled articles by melting and pouring/casting molding of molten waste plastic, comprising the step of casting in a metal mold by self-weight after more than two kinds of waste plastic including material attached with a foreign object, printed matter or colored article are melted together.

2. A method of manufacturing recycled articles by melting and pouring/casting molding of molten waste plastic, comprising the process of providing more than two kinds of waste plastic into a melting machine and melting them together, the process of pouring molten resin by self-weight in a preheated metal mold, the process of forcedly cooling the molten resin in the metal mold and the metal mold with molten resin poured and the process of demolding after the cooling process.

3. A device of preheating the metal mold where melting resin is cast by self-weight, comprising the step of providing wastes gas discharged to melt waste plastic to a pollution-free combustion equipment and leading the hot wind discharged after combustion to the heating room, introducing the heat wind in the hollow layer formed in walls surrounding the heating room, heating the interior of the heating room and heating indirectly the metal mold placed in the interior.

4. A device of manufacturing recycled articles by melting and casting molding of waste plastic, comprising as for a heating room for preheating a metal mold, the means of casting molten resin in a metal mold by self-weight and the means of forcedly cooling the metal mold, the structure of running a trolley with a metal mold or casters by placing two shape steel materials in parallel and forming rails, and as for the means of casting molten resin in a metal mold by self-weight, the structure of placing rails where a trolley with a metal mold or a metal mold with casters runs on a seesaw-moving table to the discharging unit of molten resin.

5. A metal mold for melting and casting molding of waste plastic, comprising a metal mold where melting waste plastic is cast by self-weight, a presser die which covers the top of molten resin poured in the metal mold by self-weight and can be moved downward so that the top of the molten resin can be pushed down and also the surface touching the molten resin in the metal mold which is Teflon-coated with fluorocarbon resin coating.

6. A device of melting and casting molding of waste plastic, comprising a storing heating discharging device to temporarily store resin melted in a melting machine, the storing heating discharging device having means to heat resin within the storing part, means to insulate heat which avoids heat dissipation, means to pressurize on the top of molten resin poured in a metal mold by self-weight which is placed closely to the storing heating discharging device.

7. A demolding method of melting and pouring/casting molding molten products of waste plastic, comprising the step of demolding of the metal mold after primary pressure/ cooling process complete by pressurizing on the presser mold of the metal mold from the top with the metal mold poured with molten resin by self-weight and the molten resin in the metal mold, both immersed in water spray of cooling water or pool, thereafter putting the demolded casting products only again in the cooling water and cooling it off.
